# EUROPÄISCHE PATENTSCHRIFT

(11) **EP 4 581 507 B1**
(45) Veröffentlichungstag und Bekanntmachung des Hinweises auf die Patenterteilung: **01.07.2026**
(21) Anmeldenummer: 23761852.5
(22) Anmeldetag: 24.08.2023
(51) Int. Cl.: G06F 21/57

(54) **STEUERGERÄT UND VERFAHREN ZUM INITIALISIEREN EINES STEUERGERÄTS**
CONTROL DEVICE AND METHOD FOR INITIALIZING A CONTROL DEVICE
DISPOSITIF DE COMMANDE ET PROCÉDÉ D'INITIALISATION D'UN DISPOSITIF DE COMMANDE

(30) Priorität: 31.08.2022 DE 102022209019
(43) Veröffentlichungstag der Anmeldung: 09.07.2025
(73) Patentinhaber: Schaeffler Technologies AG & Co. KG, 91074 Herzogenaurach (DE)
(72) Erfinder: HUBER, Elias, 80687 München (DE); NEUMÜLLER, Gabriel, 80687 München (DE)
(74) Vertreter: Schaeffler Technologies
(86) Internationale Anmeldenummer: PCT/EP2023/073232
(87) Internationale Veröffentlichungsnummer: WO 2024/046863

(56) Entgegenhaltungen:
- EP-A1- 3 311 601
- EP-B1- 3 311 601
- WO-A1-2018/125325

## Beschreibung

Die Erfindung betrifft ein Steuergerät umfassend wenigstens eine Datenverarbeitungseinheit, wenigstens einen nichtflüchtigen Speicher und wenigstens eine Schnittstelle sowie ein Verfahren zum Initialisieren eines derartigen Steuergeräts.

Derartige Steuergeräte sind aus dem Stand der Technik vielfach bekannt. Beispielsweise werden derartige Steuergeräte im Fahrzeug verwendet, um verschiedene, funktionsspezifische Einheiten zu kontrollieren und einen Datenaustausch mit einer weiteren Steuereinheit, wie beispielsweise einer zentralen Fahrzeugsteuerung, zu ermöglichen. In diesem Fall sind die einzelnen Steuergeräte typischerweise über ein oder mehrere Bussysteme, wie insbesondere einen Fahrzeugbus, miteinander verbunden. Neben spezifischen Funktionen, wie beispielsweise der Ansteuerung eines Aktors oder dem Abfragen eines Sensors, bieten derartige Steuergeräte auch eine oder mehrere Schnittstellen für eine Fehlersuche, einer Konfiguration oder Analyse an. Aus Sicherheitsgründen wird der Zugang zu derartige Schnittstellen in der Regel durch einen Sicherheitsschlüssel geschützt. Ohne Kenntnis des Schlüssels ist ein Zugriff auf die die entsprechende Schnittstelle beziehungsweise eine darüber bereitgestellte Funktion nicht möglich.

Beispielsweise offenbart die WO 2018/125325 A1 eine Vorrichtung und ein Verfahren zum Ermitteln eines Sicherheitszustands. Daraus ist ein Halbleiterchip-Bauelement bekannt, das Vorrichtungszustandssicherungen aufweist, mit denen verschiedene Vorrichtungszustände und entsprechende Sicherheitsstufen für das Halbleiterchip-Bauelement beim Übergang von der Waferherstellung zur bereitgestellten Vorrichtung konfiguriert werden können. Die Vorrichtungszustände und Sicherheitsstufen verhindern, dass auf das Halbleiterchip-Bauelement zugegriffen und es ausgenutzt wird, beispielsweise während der Fertigungstests.

Der vorliegenden Erfindung liegt unter anderem die Aufgabe zugrunde, derartige Steuergeräte und Verfahren zu ihrer Initialisierung und zu ihrem Betrieb weiterzuentwickeln. Insbesondere soll eine Sicherheit derartiger Steuergeräte erhöht werden und/oder die Flexibilität eines Sicherheitsverfahrens verbessert werden.

Gemäß einem ersten Aspekt wird ein Steuergerät offenbart, das wenigstens eine Datenverarbeitungseinheit, wenigstens einen nichtflüchtigen Speicher zum Speichern von Programmcode für die Datenverarbeitungseinheit und wenigstens eine Schnittstelle zum Zugreifen auf von dem Steuergerät bereitgestellte Dienste umfasst. Dabei ist das Steuergerät dazu eingerichtet, in einer offenen Betriebsart zu starten, wenn ein vorbestimmter Speicherbereich des wenigstens einen nichtflüchtigen Speichers keine Daten enthält, und in der offenen Betriebsart einen ersten Dienst zum Schreiben von Schlüsseln in den vorbestimmten Speicherbereich bereitzustellen. Das Steuergerät ist des Weiteren dazu eingerichtet, in einer geschützten Betriebsart zu starten, wenn der vorbestimmte Speicherbereich Daten enthält, und in der geschützten Betriebsart wenigstens einen zweiten Dienst zum Abfragen und/oder Ändern von in der wenigstens einen Datenverarbeitungseinheit und/oder dem wenigstens einen nichtflüchtigen Speicher gespeicherten Daten bereitzustellen, wobei Zugriff auf den zweiten Dienst in der geschützten Betriebsart mittels wenigstens eines in dem vorbestimmten Speicherbereich gespeicherten Schlüssels abgesichert werden. Das erfindungsgemäße Steuergerät ist ferner dazu eingerichtet, den wenigstens einen zweiten Dienst zusätzlich in der offenen Betriebsart bereitzustellen, wobei Zugriffe auf den zweiten Dienst in der offenen Betriebsart nicht mittels eines in dem vorbestimmten Speicherbereich gespeicherten Schlüssels abgesichert werden.

Durch die Bereitstellung der beiden oben genannten Betriebsarten und der zugehörigen Dienste wird es insbesondere ermöglicht, einen individuellen Schlüssel nach Fertigstellung des Steuergeräts einmalig in einen vorbestimmten Speicherbereich des Steuergeräts zu speichern. Auf diese Weise können Steuergeräte individualisiert werden, das heißt mit einem oder mehreren individuellen Schlüsseln gegen unberechtigte Zugriffe abgesichert werden. Dabei wird der oder werden die Schlüssel durch einen entsprechenden ersten Dienst des Steuergeräts selbst in den vorbestimmten Speicherbereich geschrieben, sodass es insbesondere nicht erforderlich ist, die entsprechenden Schlüssel direkt in einen Programmcode, insbesondere einen Bootcode der Datenverarbeitungseinheit fest vorzugeben. Dabei erlaubt der erste Dienst das Schreiben von mehreren Schlüsseln, sodass gegebenenfalls unterschiedliche Dienste mit unterschiedlichen Schlüsseln abgesichert werden können.

Optional kann in der offenen Betriebsart ein dritter Dienst zum Schreiben von Validierungsdaten durch das Steuergerät angeboten werden, der es gestattet, die in dem vorbestimmten Speicherbereich gespeicherten Schlüssel zusätzlich durch eine Prüfsumme und/oder ein Validierungsmuster abzusichern.

Optional sind in der geschützten Betriebsart keine weiteren Zugriffe auf den ersten Dienst möglich. Beispielsweise können Anfragen an den ersten Dienst in der geschützten Betriebsart mit einer Fehlermeldung zurückgewiesen werden, die die Nichtverfügbarkeit des ersten Dienstes anzeigt.

Dagegen kann der zweite Dienst zusätzlich auch in der offenen Betriebsart erreichbar sein, beispielsweise, um in einer abschließenden Phase der Herstellung des Steuergeräts Systemtests oder ähnliche Funktionen zu ermöglichen.

Beispiele für durch einen oder mehrere Schlüssel abgesicherte zweite Dienste sind insbesondere ein Dienst zur Fehlersuche, ein Dienst für Zugriffe auf Mess- und Kalibrierungsdaten und/oder eine Dienst zum Schreiben von Programmcode für die Datenverarbeitungseinheit des Steuergeräts. Derartige Dienste können über allgemeine oder spezifische Schnittstellen und/oder über entsprechend an den Dienst angepasste Protokolle erreichbar sein.

Bei dem wenigstens einen nichtflüchtigen Speicher handelt es sich beispielsweise um einen Flashspeicher, insbesondere einen integrierten Flashspeicher eines Mikrocontrollers. Dabei ist von Vorteil, dass einzelne Speicherzellen von Speicherseiten, zum Beispiel eine oder mehrere Speicherseiten, in denen die Schlüssel des vorbestimmten Speicherbereichs gespeichert sind, nicht individuell, sondern nur seitenweise gelöscht werden können. Dies erschwert zusätzlich eine nachträgliche Manipulation von in dem Steuergerät gespeicherten Schlüsseln.

Gemäß einem zweiten Aspekt wird ein Verfahren zum Initialisieren eines Steuergeräts mit wenigstens einer Datenverarbeitungseinheit, wenigstens einen nichtflüchtigen Speicher zum Speichern von Programmcode für die Datenverarbeitungseinheit und wenigstens einer Schnittstelle zum Zugreifen auf von dem Steuergerät bereitgestellte Dienste offenbart. Dabei kann es sich insbesondere um ein Steuergerät gemäß dem ersten Aspekt handeln. Das Verfahren umfasst die folgenden Schritte:
- Starten des Steuergeräts in einer offenen Betriebsart;
- Schreiben wenigstens eines Schlüssels mittels eines ersten Dienstes in einem vorbestimmten Speicherbereich des wenigstens einen nichtflüchtigen Speichers in der offenen Betriebsart;
- Wechseln in eine geschützte Betriebsart nach dem Schreiben des wenigstens einen Schlüssels;
- Anbieten wenigstens eines zweiten Diensts zum Abfragen und/oder Ändern von in der wenigstens einen Datenverarbeitungseinheit und/oder dem wenigstens einen nichtflüchtigen Speicher gespeicherten Daten in der geschützten Betriebsart, wobei ein Zugriff auf den zweiten Dienst durch den wenigstens einen in dem vorbestimmten Speicherbereich geschriebenen Schlüssels abgesichert wird; und
- Bereitstellen des wenigstens einen zweiten Diensts (10b, 10c, 10e) zusätzlich in der offenen Betriebsart (S1), wobei Zugriffe auf den zweiten Dienst in der offenen Betriebsart (S1) nicht mittels eines in dem vorbestimmten Speicherbereich (9e) gespeicherten Schlüssels abgesichert werden.

Die Schritte des Verfahrens gemäß dem zweiten Aspekt ermöglichen es, ein Steuergerät mittels eines oder mehreren Schlüsseln zu individualisieren, beispielsweise im Rahmen eines abschließenden Funktionstests und/oder unmittelbar vor Auslieferung des Steuergeräts an einen Kunden.

Weitere vorteilhafte Ausgestaltungen sind in den angehängten Patentansprüchen sowie der nachfolgenden, ausführlichen Beschreibung von Ausführungsbeispielen angegeben.

Die Erfindung wird nachfolgend anhand eines konkreten Ausführungsbeispieles unter Bezugnahme auf die angehängten Figuren im Detail beschrieben. Darin zeigen:
- Figur 1: eine schematische Darstellung eines Steuergeräts,
- Figur 2: eine schematische Darstellung des Speicherinhalts eines nichtflüchtigen Speichers,
- Figur 3: ein Zustandsdiagramm des Steuergeräts,
- Figur 4: von dem Steuergerät bereitgestellte Dienste und Schnittstellen,
- Figur 5: ein Ablaufdiagramm eines Verfahrens zum Initialisieren des Steuergeräts,
- Figur 6: ein Ablaufdiagramm eines Verfahrens zum Schreiben eines Schlüssels,
- Figur 7: ein Ablaufdiagramm eines Verfahrens zum Abschließen eines Speicherbereichs mit darin gespeicherten Schlüsseln und
- Figur 8: ein Ablaufdiagramm eines Verfahrens zum Validieren von gespeicherten Schlüsseln.

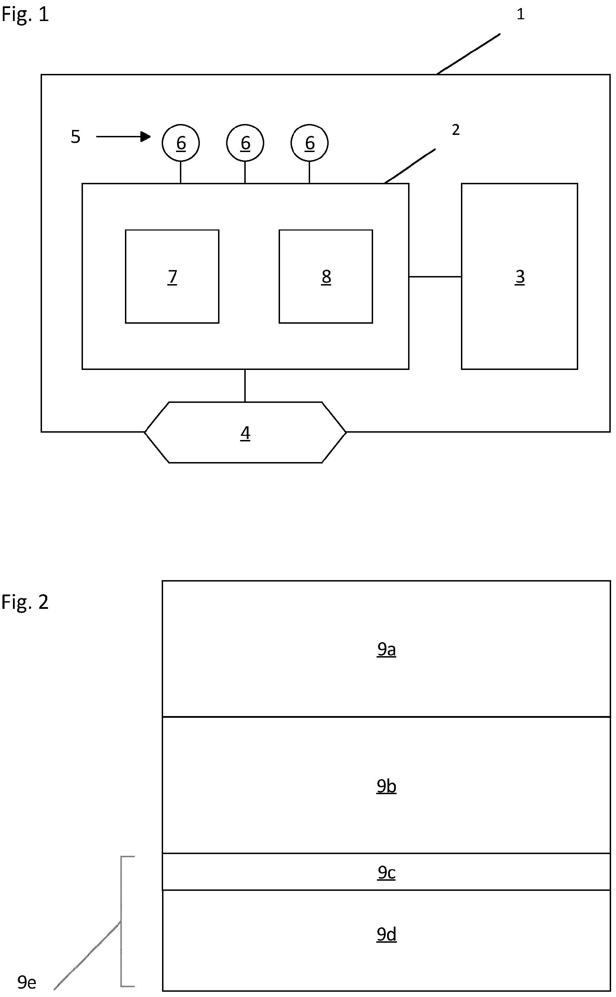

Figur 1 zeigt schematisch den Aufbau eines elektronischen Steuergeräts 1 (Englisch: Electronic Control Unit). Das Steuergerät 1 umfasst im Ausführungsbeispiel einen Mikrocontroller 2, eine Sensorschaltung 3 sowie eine Fahrzeugbusschnittstelle 4. Darüber hinaus umfasst das Steuergerät 1 eine weitere, interne Schnittstelle 5, die im Ausführungsbeispiel durch eine Mehrzahl von Nadelkontakten 6 gebildet wird. Die interne Schnittstelle 5 wird insbesondere im Rahmen der Produktion genutzt, um Funktionstests auf sehr niedrigem Niveau durchzuführen. Nach Schließen und gegebenenfalls Versiegeln eines Gehäuses des Steuergerätes 1 ist die interne Schnittstelle 5 in der Regel nicht mehr von außen erreichbar. Dagegen bleibt die Fahrzeugbusschnittstelle 4 auch nach Verbau des Steuergeräts 1, beispielsweise in einem Kraftfahrzeug, über ein entsprechendes Bussystem, insbesondere einen Fahrzeugbus wie zum Beispiel mit einem CAN-Bus, zugänglich.

Im Ausführungsbeispiel umfasst der Mikrocontroller 2 eine Datenverarbeitungseinheit 7 sowie einen internen, als Flashspeicher ausgeführten, nichtflüchtigen Speicher 8. In dem nichtflüchtigen Speicher 8 sind sowohl Programmcode zum Betrieb der Datenverarbeitungseinheit 7 beziehungsweise des Steuergeräts 1 als auch zugehörige Daten des Steuergeräts 1 gespeichert. Selbstverständlich können anstelle eines einzelnen, internen Flashspeichers auch ein oder mehrere interne und/oder externe nichtflüchtige Speicher 8 zum Speichern von Programmcode und/oder Daten innerhalb des Steuergeräts 1 vorgesehen sein.

Figur 2 zeigt schematisch den Inhalt des nichtflüchtigen Speichers 8. Der Speicher 8 ist in mehrere Speicherbereiche 9a bis 9d aufgeteilt. Beispielsweise ist in einem ersten Speicherbereich 9a Programmcode für einen sogenannten Bootloader oder Flashbootlaoder (FBL) bzw. Initialisierungscode gespeichert, der unmittelbar nach Starten des Steuergeräts 1, insbesondere beim Anlegen einer Betriebsspannung an die Datenverarbeitungseinheit 7, ausgeführt wird. In einem zweiten Speicherbereich 9b sind weiterer Programmcode und zugehörige Daten gespeichert. Hierzu bietet das Steuergerät, beispielsweise über den Bootloader bzw. den Initialisierungscode, typischerweise einen Dienst zum Schreiben von Programmcode in den nichtflüchtigen Speicher 8 an. Beispielsweise können in dem zweiten Speicherbereich 9b anwendungsspezifische Funktionen für die Sensorschaltung 3 oder spezielle Dienstprogramme zur Fehlersuche oder für den Zugriff auf Mess- und Kalibrierungsdaten abgelegt werden.

Die Speicherbereiche 9c und 9d dienen vorliegend zum Speichern von Schlüsseln, insbesondere Sicherheitsschlüsseln zum Verschlüsseln und/oder Authentifizieren von Zugriffen auf vorbestimmte Schnittstellen oder Dienste des Steuergeräts 1. Dabei ist im Ausführungsbeispiel in dem dritten Speicherbereich 9c nur ein einzelner Schlüssel, insbesondere für einen Dienst zur Fehlersuche gespeichert. In dem vierten Speicherbereich 9d sind eine Mehrzahl von unterschiedlichen Schlüsseln zum Zugriff auf unterschiedliche Dienste des Steuergeräts 1 gespeichert.

Im Ausführungsbeispiel bilden die Bereiche 9c und 9d einen zusammenhängenden Speicherbereich 9e zum Speichern von Sicherheitsschlüsseln. In diesem Fall werden die in dem zusammenhängenden Speicherbereich 9e gespeicherten Schlüssel, wie nachfolgend beschrieben, auf gleichartige Weise gespeichert, geschützt und benutzt.

In einer alternativen Ausgestaltung befindet sich der Speicherbereich 9c in einem anderen Speicherbereich, beispielsweise innerhalb des Speicherbereichs 9a. In diesem Fall kann der Schlüssel für den Dienst zur Fehlersuche auch fest in den nichtflüchtigen Speicher 8 geschrieben werden, beispielsweise durch entsprechendes Patchen eines hexadezimalen Codes, der auch den Programmcode des Bootloaders bzw. des Initialisierungscodes enthält. In diesem Fall beziehen sich die nachfolgend beschriebenen Funktionen nur auf den Speicherbereich 9d.

Das Steuergerät 1 bietet, wie nachfolgend beschrieben, verschiedene Dienste zum Zugriff auf Daten des Mikrocontrollers 2 und insbesondere auf in dem nichtflüchtigen Speicher 8 gespeicherte Daten an. Dabei ist jedoch kein Zugriff auf die Speicherbereiche 9c oder 9d möglich. Derartige Anfragen werden beispielsweise durch den Bootloader bzw. Initialisierungscode abgefangen und verhindert oder erst gar nicht über die Schnittstellen 4 oder 5 angeboten.

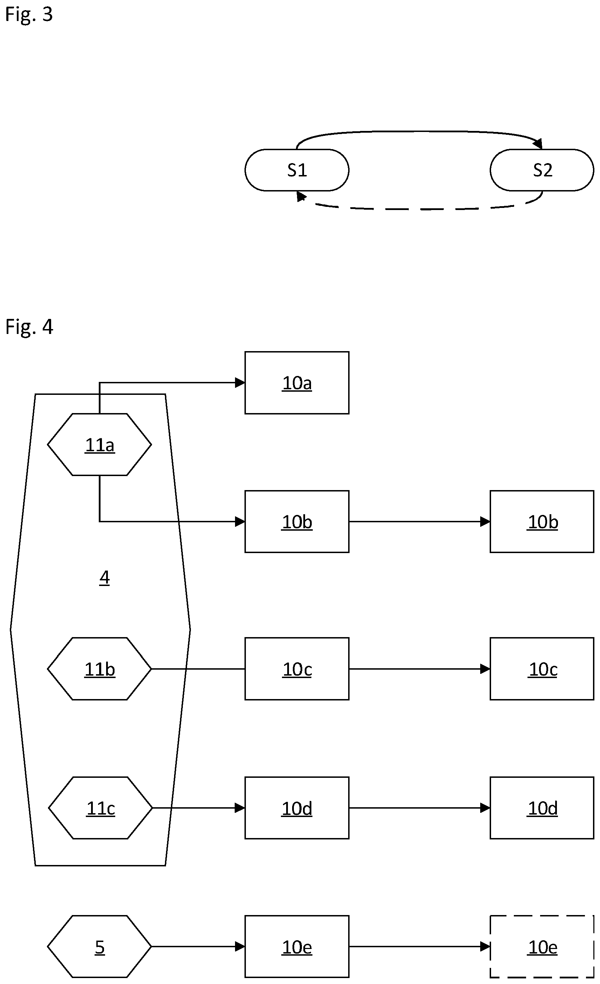

Figur 3 zeigt ein Zustandsdiagramm des Steuergeräts 1. Darin ist zu erkennen, dass das Steuergerät 1 in einer ersten, offenen Betriebsart S1 oder einer zweiten, geschützten Betriebsart S2 betrieben werden kann. Wie nachfolgend im Detail beschrieben, wechselt das Steuergerät durch Schreiben und gegebenenfalls Validieren von Schlüsseln von der offenen Betriebsart S1 in die geschützte Betriebsart S2. Ein Rückkehr aus der geschützten Betriebsart S2 in die offene Betriebsart S1 ist typischerweise nicht vorgesehen. Diese kann jedoch gegebenenfalls dadurch erzwungen werden, dass der gesamte Speicherinhalt des nichtflüchtigen Speichers 8 gelöscht wird, beispielsweise über einen entsprechenden Dienst zum Zurücksetzen des Steuergeräts 1 in einen Grundzustand vor der Individualisierung.

Figur 4 zeigt beispielhaft verschiedene Dienste 10a bis 10e, die von dem Steuergerät 1 bereitgestellt werden. Die verschiedenen Dienste sind teilweise über verschiedene Schnittstellen und/oder verschiedene Protokolle erreichbar. Darüber hinaus sind nicht alle Dienste in jeder der beiden Betriebsarten S1 und S2 erreichbar. In der Figur 4 sind die in der geschützten Betriebsart S2 erreichbaren Dienste in der rechten Spalte dargestellt. Die in der offenen Betriebsart S1 erreichbaren Dienste sind in der mittleren Spalte dargestellt. In der linken Spalte sind die jeweils verwendeten Schnittstellen beziehungsweise Protokolle zum Zugriff auf die entsprechenden Dienste dargestellt.

Ausschließlich in der offenen Betriebsart S2 ist ein Dienst 10a zum einmaligen Schreiben und gegebenenfalls Validieren von Schlüsseln in den Speicher 8 des Steuergeräts 1 erreichbar. Im beschriebenen Ausführungsbeispiel ist dieser Dienst über eine logische Unified Diagnostic Services (UDS) Schnittstelle 11a gemäß ISO 14229-1 erreichbar, die beispielsweise über die Fahrzeugbusschnittstelle 4 zur Verfügung gestellt wird. Ein Überschreiben oder Löschen von Schlüsseln ist selbst in der offenen Betriebsart weder vorgesehen noch möglich.

Wäre der Dienst 10a zum Schreiben von Schlüsseln auch on der geschützten Betriebsart S2 erreichbar, ergäbe sich grundsätzlich die Möglichkeit für weitere Sicherheitsverletzungen durch das nachträgliche Programmieren von Schlüsseln, die durch verhältnismäßig aufwändige Sicherheitsmechanismen abgefangen werden müssten, um die Sicherheit des Steuergeräts 1 nicht zu kompromittieren. Durch das Ausblenden beziehungsweise Verstecken des Dienstes 10a in der geschützten Betriebsart S2 ist dagegen nur eine einmalige Programmierung von Schlüsseln, insbesondere unmittelbar nach Abschluss der Herstellung, möglich. Dadurch werden derartige Probleme von vorneherein vermieden, so dass die Implementierung des Dienstes 10a deutlich einfacher ausgestaltet werden kann.

Im Ausführungsbeispiel bietet der Bootloader bzw. Initialisierungscode des Weiteren sowohl in der offenen Betriebsart S1 als auch in der geschützten Betriebsart S2 einen Dienst 10b zum Programmieren von Teilen des nichtflüchtigen Speichers 8, insbesondere des zweiten Speicherbereichs 9b an. Dieser Dienst kann über eine spezielle Schnittstelle oder ebenfalls über die UDS-Schnittstelle 11a angeboten werden, wie in der Figur 4 dargestellt.

Zudem werden sowohl in der offenen Betriebsart S1 als auch in der geschützten Betriebsart S2 ein Dienst 10c zum Zugriff auf Mess- und Kalibrierungsdaten über eine XCP-Schnittstelle 11b beziehungsweise das "Universal Measurement and Calibration Protocol" gemäß Standard ASAM MCD-1 XCP angeboten.

Typischerweise bietet das Steuergerät 1 sowohl in der offenen Betriebsart S1 als auch in der geschützten Betriebsart S2 einen oder mehrere Dienste 10d zum Ausführen von gerätespezifischen Funktionen, wie beispielsweise dem Auslesen von Sensorwerten der Sensorschaltung 3, an. Zugriffe auf derartige Nutzerfunktionen erfolgen in der Regel über eine ungesicherte Schnittstelle 11c, beispielsweise der Fahrzeugbusschnittstelle 4, und werden daher im Weiteren nicht beschrieben.

Schließlich ist in der offenen Betriebsart S1 und, optional, in der geschützten Betriebsart S2 einen Dienst 10e zur Fehlersuche, auf Englisch auch als Debug-Service bezeichnet, über die interne Schnittstelle 5 verfügbar. Sofern der Dienst 10e zur Fehlersuche auch in der geschützten Betriebsart S2 zur Verfügung steht, ermöglicht er optional auch das Zurücksetzen des Steuergeräts 1 in einen Grundzustand wie in der Figur 3 angedeutet. Dabei wird der interne Speicher 8 beispielsweise komplett gelöscht, so dass nachfolgend keine der zuvor von dem Steuergerät 1 gespeicherten Daten mehr ausgelesen werden können.

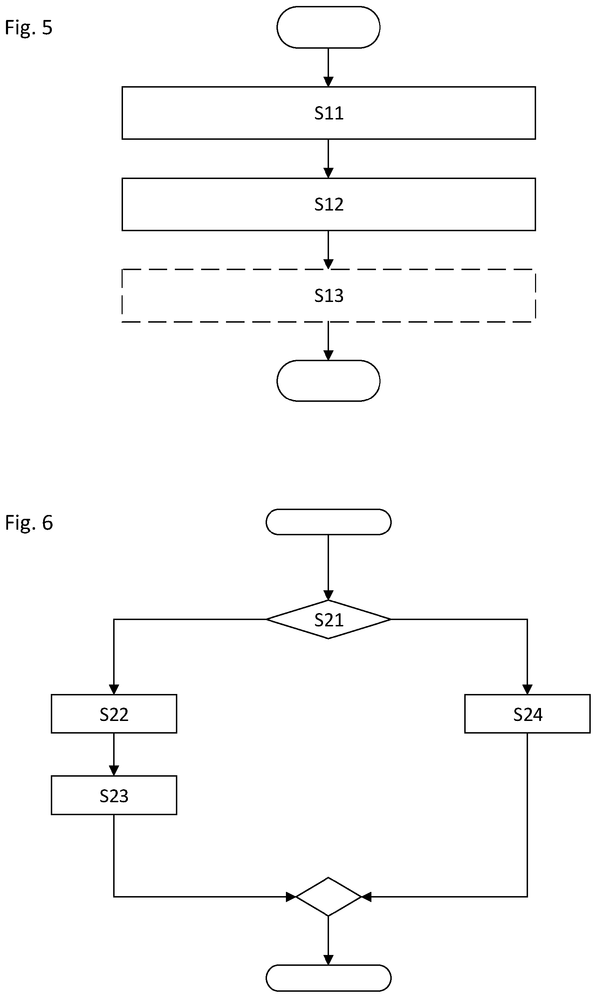

Figur 5 zeigt schematisch eine Initialisierung des Steuergeräts 1.

Demnach wird das Steuergerät 1 in einem Schritt S11 in einem Zustand gestartet, in dem sich in dem Speicherbereich 9e noch keine Schlüssel befinden. Dies ist beispielsweise unmittelbar nach Fertigstellung des Steuergeräts 1 im Rahmen eines Funktionstests der Fall. Eine in dieser Phase oder vorab in den ersten Speicherbereich 9a geschriebene Bootloader erkennt, dass der Speicherbereich 9e noch keine Daten enthält und startet das Steuergerät 1 daraufhin in der offenen Betriebsart S1.

In dem Schritt S12 können nachfolgend ein oder mehrere Schlüssel unter Verwendung des Dienstes 10a in den Speicherbereich 9e geschrieben werden. Hierzu dient im Ausführungsbeispiel ein entsprechender UDS-Dienst zum Schreiben von Sicherheitsschlüsseln mit einer vorbestimmten Kennung. Alternativ oder zusätzlich kann in dieser Betriebsart auch ein besonderer Schlüssel, beispielsweise ein Debug-Schlüssel für den Dienst 10e zur Fehlersuche, an eine feste Adresse, insbesondere in den Speicherbereich 9c, geschrieben werden.

In einem nachfolgenden Schritt S13 wird das Steuergerät 1 in die geschützte Betriebsart S2 versetzt. Optional werden zuvor die in den Speicherbereich 9e geschriebenen Daten validiert. Je nach Implementierung werden dabei alle Schlüssel des gesamten Speicherbereichs 9e oder nur die in dem Speicherbereich 9d gespeicherten Schlüssel berücksichtigt. Spätestens bei einem nachfolgenden Neustart stellt das Steuergerät 1 fest, dass in dem Speicherbereich 9e bereits Daten gespeichert sind und startet ab diesem Zeitpunkt in der geschützten Betriebsart S2. Der erste Dienst 10a deaktiviert sich somit selbst.

Figur 6 zeigt im Detail die von dem Dienst 10a ausgeführten Schritte S21 bis S24 beim Schreiben von Schlüsseln in den Speicherbereich 9e.

In einem ersten Schritt S21 wird überprüft, ob ein entsprechender Teilspeicherbereich des Speicherbereichs 9e zum Speichern von Schlüsseln noch leer ist, das heißt keine Daten enthalten. Im Falle eines Flashspeichers bedeutet dies, dass alle Bits des entsprechenden Teilspeicherbereichs gesetzt sind, also aus einem Muster von lauter Einsen bestehen.

Beispielsweise können verschieden Schlüssel mittels verschiedenen Kennungen gespeichert werden. In diesem Fall wird überprüft, ob noch kein Schlüssel mit einer als Parameter angegebenen Kennung in dem Speicherbereich 9e gespeichert wurde. Dabei kann die Kennung explizit, beispielsweis in Form einer Tabelle gespeichert werden, oder lediglich als Indiz für einen vorbestimmten Teilspeicherbereich des Speicherbereichs 9e dienen, beispielsweise der Index 0 für den Schlüssel im Speicherbereich 9c.

Ist dies der Fall, wird ein als weiterer Parameter übergebener Schlüssel im Schritt S22 in einen entsprechenden Teilspeicherbereich des Speicherbereichs 9e geschrieben. Beispielsweise kann der erste Schlüssel mit einer fest vorgegebenen Kennung in den Speicherbereich 9c gespeichert werden, während weitere Schlüssel sukzessive in den Speicherbereich 9d geschrieben werden.

Ist die Schreiboperation erfolgreich, bestätigt der Dienst 10a dies im Schritt S23 mit einer Bestätigungsnachricht über die UDS-Schnittstelle 11a.

Ergibt sich im Schritt S21, dass der Teilspeicherbereich zum Speichern des entsprechenden Schlüssels bereits zuvor beschrieben wurde, wird im Schritt S24 dagegen eine Fehlermeldung zurückgemeldet. Im Ausführungsbeispiel wird dabei angegeben, dass der entsprechende UDS-Service von dem Steuergerät 1 nicht bereitgestellt wird.

Es wird darauf hingewiesen, dass die Schritte S22 und S23 mehrfach hintereinander ausgeführt werden können, beispielsweise um mehrere Schlüssel mit unterschiedlichen Kennungen in den Speicherbereich 9e zu speichern.

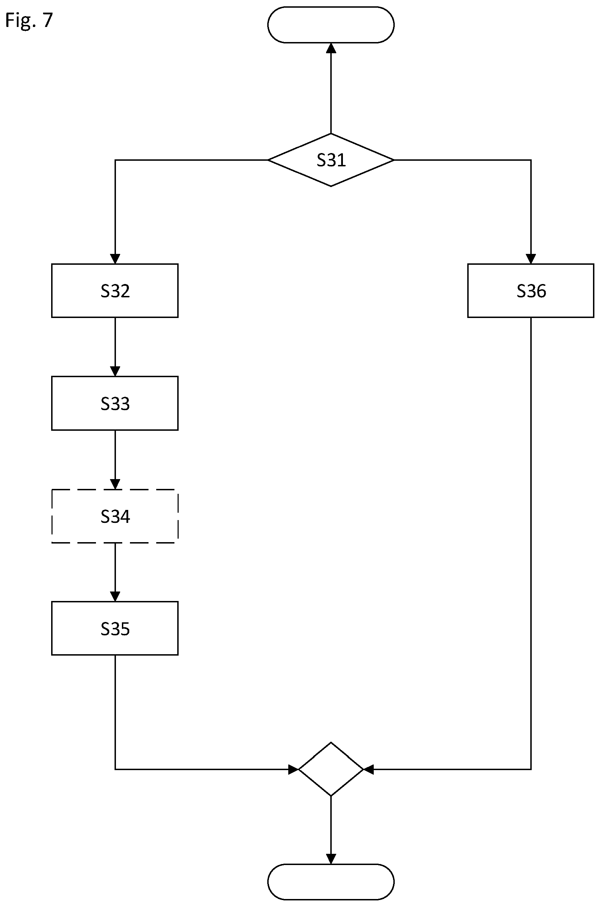

Sind alle beabsichtigen Schlüssel in dem Speicherbereich 9e gespeichert, wird optional das Verfahren gemäß Figur 7 ausgeführt, das den Speicherbereich 9e endgültig abschließt.

Darin wird in einem ersten Schritt S31 überprüft, ob ein Teilspeicherbereich zum Schreiben von Validierungsdaten noch keine Daten enthält.

Im Schritt S32 wird über wenigstens den Speicherbereich 9d, bevorzugt über den gesamten Speicherbereich 9e, eine Prüfsumme in Form einer CRC-Checksumme mit einer vorbestimmten Länge, beispielsweise 4 Byte, berechnet. Die CRC-Prüfsumme wird in den Speicherbereich 9e geschrieben, in dem auch die Schlüssel abgelegt sind, also insbesondere in den Speicherbereich 9d.

Des Weiteren wird in einem ersten Schritt S34 optional ein Validierungsmuster in den Speicherbereich 9e geschrieben. Beispielsweise können verbleibende Speicherzellen einer entsprechenden Speicherseite oder eine vorbestimmte Anzahl von Speicherzellen mit einem vorgegebenen Validierungsmuster aufgefüllt werden, um das nachträgliche Hinzufügen von Schlüsseln weiter zu erschweren.

In einem abschließenden Schritt S35 meldet die Funktion eine entsprechende positive Bestätigungsnachricht über die UDS-Schnittstelle 11a zurück.

Ist der Teilspeicherbereich für die CRC-Prüfsumme beziehungsweise das Validierungsmuster dagegen bereits bei der Überprüfung im Schritt S31 mit Daten befüllt, meldet die entsprechende Funktion im Schritt S36 eine Fehlermeldung zurück. Dabei kann es sich wie oben beschrieben insbesondere um eine Meldung handeln, die anzeigt, dass ein entsprechender UDS-Dienst nicht unterstützt wird. Somit stellt auch die Funktion zum Abschließen den Speicherbereichs 9e eine Funktion dar, die nur einmalig und nur in der offenen Betriebsart S1 erfolgreich ausgeführt werden kann.

Nach Aufruf der Funktion zum Abschließen den Speicherbereichs 9e steht der Dienst 10a zum Speichern von Schlüsseln nicht mehr zur Verfügung. Selbst wenn es gelänge, den Dienst 10a zum Schreiben von Schlüssel erneut aufzurufen, wären derartige Schlüssel nicht mehr in den gespeicherten Validierungsdaten berücksichtigt und würden damit bei der nächsten Validierung zu einem Fehler führen, wie unten beschrieben.

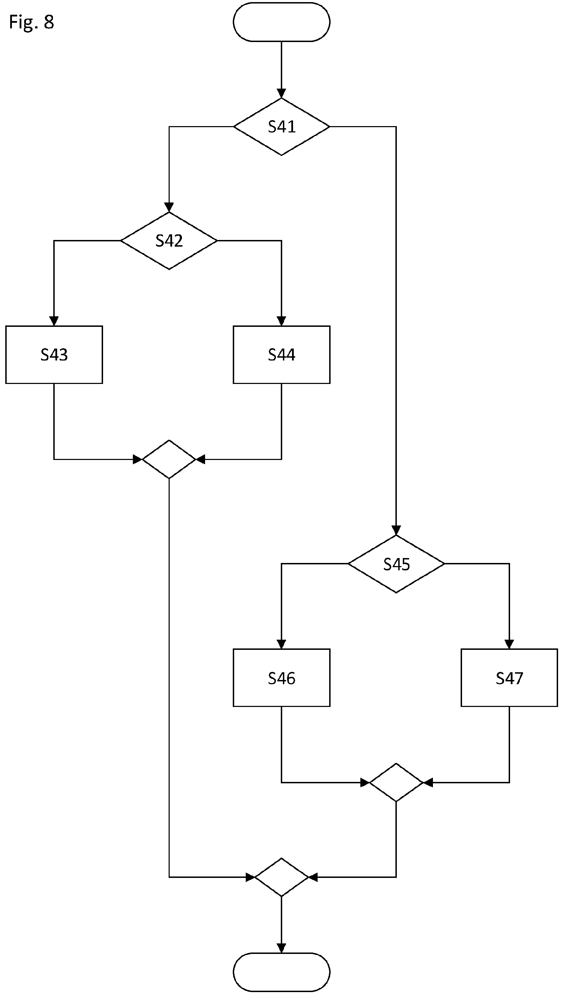

Figur 8 zeigt ein Verfahren zum Überprüfen von Sicherheitsschlüsseln im Betrieb des Steuergeräts 1, insbesondere in der geschützten Betriebsart 2. Die in der Figur 8 dargestellte Funktion wird insbesondere jedes Mal dann ausgeführt, wenn Teile des Programmcodes auf einen in dem Speicherbereich 9e gespeicherten Schlüssel zugreifen. Beispielsweise wird das Verfahren durch den Programmcode des Bootloaders bzw. des Initialisierungscodes implementiert.

In einem ersten Schritt S41 wird überprüft, ob sich in dem Speicherbereich 9e, insbesondere in dem Speicherbereich 9d, Validierungsdaten befindet.

Ist dies nicht der Fall, wird in einem nachfolgenden Schritt S42 überprüft, ob sich überhaupt Schlüssel in dem Speicherbereich 9e befinden.

Ist auch dies nicht der Fall, befindet sich das Steuergerät 1 noch in der offenen Betriebsart S1, in der Zugriffe im Schritt S43 ohne Sicherheitsschlüssel möglich sind. Sofern entsprechende UDS- oder XCP-Funktionen dennoch einen Schlüssel als Parameter erwarten, ist es beispielsweise möglich, die entsprechende Funktion mit jedem beliebigen Schlüssel oder ohne Angabe des entsprechenden Parameters aufzurufen. Beispielsweise ist es möglich, den Dienst 10b zum Programmieren des dritten Speicherbereichs 9d mit jedem beliebigen Schlüssel aufzurufen und den Dienst 10c ohne Angabe eines Schlüssels aufzurufen.

Ergibt sich im Schritt S42, dass für den entsprechenden Dienst ein Schlüssel in dem Speicherbereich 9c und/oder 9d gespeichert ist, wird der entsprechende Dienst im Schritt S44 durch Verwendung des entsprechenden Schlüssels geschützt. Zugriffe mit einem anderen als dem gespeicherten Schlüssel sind in diesem Fall nicht möglich.

Ergibt sich bereits im Schritt S41, dass Validierungsdaten in dem Speicherbereich 9d gespeichert sind, wird in einem Schritt S45 zunächst die Gültigkeit einer Prüfsumme und/oder des Validierungsmusters überprüft.

Sind die gespeicherte Prüfsumme und/oder das gespeicherte Validierungsmuster gültig, werden in einem Schritt S46 Zugriffe nur mittels des gespeicherten Schlüssels zugelassen, wie bereits oben anhand des Schritts S44 beschrieben.

Ergibt sich bei der Prüfung im Schritt S45 dagegen, dass die Prüfsumme und/oder das Validierungsmuster fehlerhaft sind, wird das Steuergerät 1 in eine weitere, blockierte Betriebsart versetzt. In der blockierten Betriebsart werden jegliche Zugriffe auf geschützte Dienste, wie insbesondere die Dienste 10a bis 10c und 10e, dauerhaft blockiert. Gegebenenfalls kann das Steuergerät 1 auf derartiges Sicherheitsproblem auch dadurch reagieren, dass der gesamte nichtflüchtige Speicher 8 gelöscht wird und das Steuergerät zurück in die offenen Betriebsart S1 versetzt wird.

### Bezugszeichenliste

- 1: Steuergerät
- 2: Mikrocontroller
- 3: Sensorschaltung
- 4: Fahrzeugbusschnittstelle
- 5: interne Schnittstelle
- 6: Nadelkontakt
- 7: Datenverarbeitungseinheit
- 8: nichtflüchtiger Speicher
- 9a bis 9e: Speicherbereiche
- 10a: Dienst zum Schreiben von Schlüsseln
- 10b: Dienst zum Programmieren
- 10c: Dienst für Zugriffe auf Mess- und Kalibrierungsdaten
- 10d: Dienst zum Ausführen von gerätespezifischen Funktionen
- 10e: Dienst zur Fehlersuche
- 11a: UDS-Schnittstelle
- 11b: XCP-Schnittstelle
- 11c: ungesicherte Schnittstelle

- S1: offene Betriebsart
- S2: geschützte Betriebsart

- S11 bis S47: Verfahrensschritte

## Patentansprüche

1. Steuergerät (1), umfassend:
- wenigstens eine Datenverarbeitungseinheit (7);
- wenigstens einen nichtflüchtigen Speicher zum Speichern von Programmcode für die Datenverarbeitungseinheit (7); und
- wenigstens eine Schnittstelle (4, 5) zum Zugreifen auf von dem Steuergerät (1) bereitgestellte Dienste;
wobei das Steuergerät (1) dazu eingerichtet ist,
- in einer offenen Betriebsart (S1) zu starten, wenn ein vorbestimmter Speicherbereich (9e) des wenigstens einen nichtflüchtigen Speichers keine Daten enthält;
- in der offenen Betriebsart (S1) einen ersten Dienst (10a) zum Schreiben von Schlüsseln in den vorbestimmten Speicherbereich (9c, 9d) bereitzustellen;
- in einer geschützten Betriebsart (S2) zu starten, wenn der vorbestimmte Speicherbereich (9e) Daten enthält;
- in der geschützten Betriebsart (S2) wenigstens einen zweiten Dienst (10b, 10c, 10e) zum Abfragen und/oder Ändern von in der wenigstens einen Datenverarbeitungseinheit (7) und/oder dem wenigstens einen nichtflüchtigen Speicher (8) gespeicherten Daten bereitzustellen, wobei Zugriffe auf den zweiten Dienst (10b, 10c, 10e) in der geschützten Betriebsart (S2) mittels wenigstens eines in dem vorbestimmten Speicherbereich (9e) gespeicherten Schlüssels abgesichert werden; und
- den wenigstens einen zweiten Dienst (10b, 10c, 10e) zusätzlich in der offenen Betriebsart (S1) bereitzustellen, wobei Zugriffe auf den zweiten Dienst in der offenen Betriebsart (S1) nicht mittels eines in dem vorbestimmten Speicherbereich (9e) gespeicherten Schlüssels abgesichert werden.

2. Steuergerät (1) nach Anspruch 1, wobei das Steuergerät (1) des Weiteren dazu eingerichtet ist,
- in der offenen Betriebsart (S1) einen dritten Dienst zum Schreiben von Validierungsdaten, insbesondere einer Prüfsumme und/oder eines Validierungsmusters, für in dem vorbestimmten Speicherbereich (9e) gespeicherten Schlüssel bereitzustellen; und
- in der geschützten Betriebsart (S2) einen unveränderten Zustand der in dem vorbestimmten Speicherbereich (9e) gespeicherten Schlüssel mittels der Validierungsdaten zu überprüfen, bevor eine Abfrage und/oder Änderung gemäß dem wenigstens einen zweiten Dienst (10b, 10c, 10e) beantwortet beziehungsweise durchgeführt wird.

3. Steuergerät (1) nach Anspruch 1 oder 2, wobei das Steuergerät (1) des Weiteren dazu eingerichtet ist, Anfragen an den ersten Dienst (10a) in der geschützten Betriebsart (S2) mit einer Fehlermeldung, die die Nichtverfügbarkeit des ersten Dienstes (10a) anzeigt, zurückzuweisen.

4. Steuergerät (1) nach einem der Ansprüche 1 bis 3, wobei das Steuergerät (1) des Weiteren dazu eingerichtet ist, in der offenen Betriebsart (S1) und/oder der geschützten Betriebsart (S2) wenigstens einen vierten Dienst (10d) zum Bereitstellen wenigstens einer Anwendungsfunktion bereitzustellen, wobei Zugriffe auf den vierten Dienst (10d) weder in der offenen Betriebsart (S1) noch in der geschützten Betriebsart (S2) mittels eines in dem vorbestimmten Speicherbereich (9e) gespeicherten Schlüssels abgesichert werden.

5. Steuergerät (1) nach einem der Ansprüche 1 bis 4, wobei der wenigstens eine zweite Dienst (10b, 10c, 10e) wenigstens einen der folgenden Dienste umfasst:
- einen Dienst (10e) zur Fehlersuche über wenigstens eine interne Schnittstelle (5), insbesondere eine mittels Nadelkontakten (6) erreichbare Debug-Schnittstelle, wobei Zugriffe auf den Dienst (10e) zur Fehlersuche in der geschützten Betriebsart (S2) mittels wenigstens eines an einer vorbestimmten Adresse des wenigstens eines nichtflüchtigen Speichers (8) gespeicherten Schlüssels abgesichert werden;
- einen Dienst (10c) für Zugriffe auf Mess- und Kalibrierungsdaten über eine Busschnittstelle (4), insbesondere für Zugriffe gemäß dem Universal Measurement and Calibration Protocol, XCP, über eine Fahrzeugbusschnittstelle (4), wobei der Dienst (10c) für Zugriffe auf Mess- und Kalibrierungsdaten keine Lesezugriffe auf den vorbestimmten Speicherbereich (9e gestattet; und/oder
- einen Dienst (10b) zum Schreiben des Programmcodes für die Datenverarbeitungseinheit (7) über eine Busschnittstelle, insbesondere einen Bootloader bzw. Initialisierungscode zum Schreiben von Firmware über eine Fahrzeugbusschnittstelle (4) in den wenigstens einen nichtflüchtigen Speicher (8), wobei der Dienst (10b) zum Schreiben keine Schreibzugriffe auf den vorbestimmten Speicherbereich (9e) gestattet.

6. Steuergerät (1) nach einem der Ansprüche 1 bis 5, wobei der wenigstens eine nichtflüchtige Speicher (8) als ein Flashspeicher, insbesondere als integrierter Flashspeicher eines Mikrocontrollers (2) ausgestaltet ist, wobei der Flashspeicher eine Mehrzahl von nur gemeinsam löschbaren Speicherseiten aufweist, und jede der Speicherseiten eine Mehrzahl von nach einem Löschvorgang einmalig beschreibbaren Speicherblöcken aufweist, und jeder Schlüssel mittels eines eigenen Schreibvorgangs in wenigstens einem Speicherblock einer gemeinsamen Speicherseite gespeichert wird, die den vorbestimmten Speicherbereich (9e) bildet.

7. Verfahren zum Initialisieren eines Steuergeräts (1) mit wenigstens einer Datenverarbeitungseinheit (7), wenigstens einem nichtflüchtigen Speicher (8) zum Speichern von Programmcode für die Datenverarbeitungseinheit (7) und wenigstens einer Schnittstelle (4, 5) zum Zugreifen auf von dem Steuergerät (1) bereitgestellte Dienste, insbesondere das Steuergerät (1) gemäß einem der Ansprüche 1 bis 6, wobei das Verfahren folgende Schritte umfasst:
- Starten (S11) des Steuergeräts (1) in einer offenen Betriebsart (S1);
- Schreiben (S12) wenigstens eines Schlüssels mittels eines ersten Dienstes (10a) in einen vorbestimmten Speicherbereich (9e) des wenigstens einen nichtflüchtigen Speichers (8) in der offenen Betriebsart (S1);
- Wechseln (S13) in eine geschützte Betriebsart (S2) nach dem Schreiben des wenigstens einen Schlüssels; und
- Anbieten wenigstens eines zweiten Diensts (10b, 10c, 10e) zum Abfragen und/oder Ändern von in der wenigstens einen Datenverarbeitungseinheit (7) und/oder dem wenigstens einen nichtflüchtigen Speicher (8) gespeicherten Daten in der geschützten Betriebsart (S2), wobei ein Zugriff auf den zweiten Dienst (10b, 10c, 10e) durch den wenigstens einen in dem vorbestimmten Speicherbereich (9e) geschriebenen Schlüssels abgesichert wird; und
- Bereitstellen des wenigstens einen zweiten Diensts (10b, 10c, 10e) zusätzlich in der offenen Betriebsart (S1), wobei Zugriffe auf den zweiten Dienst in der offenen Betriebsart (S1) nicht mittels eines in dem vorbestimmten Speicherbereich (9e) gespeicherten Schlüssels abgesichert werden.

8. Verfahren nach Anspruch 7, wobei zumindest die Schritte des Startens (S11), des Schreibens (S12) und des Wechselns (S13) in einer abschließenden Phase eines Herstellungsprozesses des Steuergeräts (1), nach dessen Zusammenbau und vor dessen Auslieferung, insbesondere im Rahmen eines Funktionstest des Steuergeräts (1), durchgeführt werden.

9. Verfahren nach Anspruch 7 oder 8, wobei der Schritt des Wechselns (S13) in die geschützte Betriebsart (S2) Folgendes umfasst:
- Berechnen wenigstens einer Prüfsumme für in dem vorbestimmten Speicherbereich (9e) gespeicherten Schlüssel;
- Speichern der wenigstens einen Prüfsumme in dem vorbestimmten Speicherbereich (9e);
- optional, Speichern eines Validierungsmusters in dem vorbestimmten Speicherbereich (9e);
- Erzeugen eines Bestätigungssignals, nach dem Schreiben der wenigstens einen Prüfsumme und, optional, dem Validierungsmusters;
- Neustarten des Steuergeräts (1), wobei die Datenverarbeitungseinheit (7) bei dem Neustart die in dem vorbestimmten Speicherbereich (9e) gespeicherten Daten erkennt und das Steuergerät (1) in die geschützte Betriebsart (S2) versetzt.

## Claims

1. Control device (1), comprising:
- at least one data processing unit (7);
- at least one nonvolatile memory for storing program code for the data processing unit (7); and
- at least one interface (4, 5) for accessing services provided by the control device (1);
wherein the control device (1) is configured
- to start in an open operating mode (S1) if a predetermined memory area (9e) of the at least one nonvolatile memory does not contain any data;
- to provide, in the open operating mode (S1), a first service (10a) for writing keys to the predetermined memory area (9c, 9d);
- to start in a protected operating mode (S2) if the predetermined memory area (9e) contains data;
- to provide, in the protected operating mode (S2), at least one second service (10b, 10c, 10e) for querying and/or changing data stored in the at least one data processing unit (7) and/or the at least one nonvolatile memory (8), wherein accesses to the second service (10b, 10c, 10e) in the protected operating mode (S2) are safeguarded by means of at least one key stored in the predetermined memory area (9e); and
- to additionally provide the at least one second service (10b, 10c, 10e) in the open operating mode (S1), wherein accesses to the second service in the open operating mode (S1) are not safeguarded by means of a key stored in the predetermined memory area (9e).

2. Control device (1) according to Claim 1, wherein the control device (1) is furthermore configured
- to provide, in the open operating mode (S1), a third service for writing validation data, in particular a checksum and/or a validation pattern, for keys stored in the predetermined memory area (9e); and
- to check, in the protected operating mode (S2), an unchanged state of the keys stored in the predetermined memory area (9e) by means of the validation data before a query and/or change according to the at least one second service (10b, 10c, 10e) is answered and/or carried out.

3. Control device (1) according to Claim 1 or 2, wherein the control device (1) is furthermore configured to reject requests to the first service (10a) in the protected operating mode (S2) with an error message indicating the non-availability of the first service (10a) .

4. Control device (1) according to any of Claims 1 to 3, wherein the control device (1) is furthermore configured to provide, in the open operating mode (S1) and/or the protected operating mode (S2), at least one fourth service (10d) for providing at least one application function, wherein accesses to the fourth service (10d) are not safeguarded by means of a key stored in the predetermined memory area (9e), either in the open operating mode (S1) or in the protected operating mode (S2).

5. Control device (1) according to any of Claims 1 to 4, wherein the at least one second service (10b, 10c, 10e) comprises at least one of the following services:
- a service (10e) for debugging via at least one internal interface (5), in particular a debug interface reachable by means of needle contacts (6), wherein accesses to the service (10e) for debugging in the protected operating mode (S2) are safeguarded by means of at least one key stored at a predetermined address of the at least one nonvolatile memory (8);
- a service (10c) for accesses to measurement and calibration data via a bus interface (4), in particular for accesses according to the Universal Measurement and Calibration Protocol, XCP, via a vehicle bus interface (4), wherein the service (10c) for accesses to measurement and calibration data does not allow read accesses to the predetermined memory area (9e); and/or
- a service (10b) for writing the program code for the data processing unit (7) via a bus interface, in particular a bootloader or initialization code for writing firmware via a vehicle bus interface (4) to the at least one nonvolatile memory (8), wherein the service (10b) for writing does not allow write accesses to the predetermined memory area (9e).

6. Control device (1) according to any of Claims 1 to 5, wherein the at least one nonvolatile memory (8) is configured as a flash memory, in particular as an integrated flash memory of a microcontroller (2), wherein the flash memory has a plurality of only jointly erasable memory pages, and each of the memory pages has a plurality of memory blocks which are one-time writable after an erase operation, and each key is stored by means of a dedicated write operation in at least one memory block of a common memory page which forms the predetermined memory area (9e).

7. Method for initializing a control device (1) comprising at least one data processing unit (7), at least one nonvolatile memory (8) for storing program code for the data processing unit (7), and at least one interface (4, 5) for accessing services provided by the control device (1), in particular the control device (1) according to any of Claims 1 to 6, wherein the method comprises the following steps:
- starting (S11) the control device (1) in an open operating mode (S1);
- writing (S12), by means of a first service (10a), at least one key to a predetermined memory area (9e) of the at least one nonvolatile memory (8) in the open operating mode (S1);
- switching (S13) to a protected operating mode (S2) after writing the at least one key; and
- offering at least one second service (10b, 10c, 10e) for querying and/or changing data stored in the at least one data processing unit (7) and/or the at least one nonvolatile memory (8) in the protected operating mode (S2), wherein an access to the second service (10b, 10c, 10e) is safeguarded by the at least one key written in the predetermined memory area (9e); and
- additionally providing the at least one second service (10b, 10c, 10e) in the open operating mode (S1), wherein accesses to the second service in the open operating mode (S1) are not safeguarded by means of a key stored in the predetermined memory area (9e).

8. Method according to Claim 7, wherein at least the steps of starting (S11), writing (S12) and switching (S13) are carried out in a concluding phase of a process for producing the control device (1), after the assembly thereof and before the delivery thereof, in particular in the context of a functional test of the control device (1).

9. Method according to Claim 7 or 8, wherein the step of switching (S13) to the protected operating mode (S2) comprises the following:
- calculating at least one checksum for keys stored in the predetermined memory area (9e);
- storing the at least one checksum in the predetermined memory area (9e);
- optionally, storing a validation pattern in the predetermined memory area (9e);
- generating a confirmation signal, after writing the at least one checksum and, optionally, the validation pattern;
- restarting the control device (1), wherein during the restart the data processing unit (7) recognizes the data stored in the predetermined memory area (9e) and puts the control device (1) into the protected operating mode (S2).

## Revendications

1. Dispositif de commande (1), comprenant :
- au moins une unité de traitement de données (7) ;
- au moins une mémoire non volatile pour stocker du code programme pour l'unité de traitement de données (7) ; et
- au moins une interface (4, 5) pour accéder à des services fournis par le dispositif de commande (1) ; dans lequel le dispositif de commande (1) est configuré
- pour démarrer dans un mode de fonctionnement ouvert (S1) si une zone de mémoire prédéterminée (9e) de l'au moins une mémoire non volatile ne contient aucune donnée ;
- pour fournir, dans le mode de fonctionnement ouvert (S1), un premier service (10a) d'écriture de clés dans la zone de mémoire prédéterminée (9c, 9d) ;
- pour démarrer dans un mode de fonctionnement protégé (S2) si la zone de mémoire prédéterminée (9e) contient des données ;
- pour fournir, dans le mode de fonctionnement protégé (S2), au moins un deuxième service (10b, 10c, 10e) pour interroger et/ou changer des données stockées dans l'au moins une unité de traitement de données (7) et/ou l'au moins une mémoire non volatile (8), dans lequel les accès au deuxième service (10b, 10c, 10e) dans le mode de fonctionnement protégé (S2) sont sécurisés au moyen d'au moins une clé stockée dans la zone de mémoire prédéterminée (9e) ; et
- pour fournir en outre, dans le mode de fonctionnement ouvert (S1), au moins un deuxième service (10b, 10c, 10e), les accès au deuxième service dans le mode de fonctionnement ouvert (S1) n'étant pas sécurisés au moyen d'une clé stockée dans la zone de mémoire prédéterminée (9e).

2. Dispositif de commande (1) selon la revendication 1, le dispositif de commande (1) étant en outre configuré
- pour fournir, dans le mode de fonctionnement ouvert (S1), un troisième service d'écriture de données de validation, en particulier un total de contrôle et/ou un motif de validation, pour des clés stockées dans la zone de mémoire prédéterminée (9e) ; et
- pour vérifier, dans le mode de fonctionnement protégé (S2), un état inchangé des clés stockées dans la zone de mémoire prédéterminée (9e) au moyen des données de validation avant qu'il ne soit répondu à une interrogation et/ou qu'un changement ne soit effectué conformément à l'au moins un deuxième service (10b, 10c, 10e).

3. Dispositif de commande (1) selon la revendication 1 ou 2, le dispositif de commande (1) étant en outre configuré pour rejeter des demandes adressées au premier service (10a) dans le mode de fonctionnement protégé (S2) par un message d'erreur indiquant l'indisponibilité du premier service (10a).

4. Dispositif de commande (1) selon l'une quelconque des revendications 1 à 3, le dispositif de commande (1) étant en outre configuré, dans le mode de fonctionnement ouvert (S1) et/ou le mode de fonctionnement protégé (S2), pour fournir au moins un quatrième service (10d) destiné à mettre à disposition au moins une fonction d'application, les accès au quatrième service (10d) n'étant sécurisés au moyen d'une clé stockée dans la zone de mémoire prédéterminée (9e) ni dans le mode de fonctionnement ouvert (S1) ni dans le mode de fonctionnement protégé (S2).

5. Dispositif de commande (1) selon l'une quelconque des revendications 1 à 4, dans lequel l'au moins un deuxième service (10b, 10c, 10e) comprend au moins l'un des services suivants :
- un service (10e) de recherche de pannes via au moins une interface interne (5), en particulier une interface de débogage joignable au moyen de contacts à pointe (6), les accès au service (10e) de recherche de pannes dans le mode de fonctionnement protégé (S2) étant sécurisés au moyen d'au moins une clé stockée à une adresse prédéterminée de l'au moins une mémoire non volatile (8) ;
- un service (10c) pour des accès à des données de mesure et d'étalonnage via une interface de bus (4), en particulier pour des accès selon le protocole universel de mesure et d'étalonnage, XCP, via une interface de bus de véhicule (4), le service (10c) pour des accès à des données de mesure et d'étalonnage ne permettant pas d'accès en lecture à la zone de mémoire prédéterminée (9e) ; et/ou
- un service d'écriture (10b) du code programme pour l'unité de traitement de données (7) via une interface de bus, en particulier un chargeur de démarrage ou un code d'initialisation pour écrire un micrologiciel via une interface de bus de véhicule (4) dans l'au moins une mémoire non volatile (8), le service d'écriture (10b) ne permettant pas d'accès en écriture à la zone de mémoire prédéterminée (9e).

6. Dispositif de commande (1) selon l'une quelconque des revendications 1 à 5, dans lequel l'au moins une mémoire non volatile (8) est conçue sous forme de mémoire flash, en particulier de mémoire flash intégrée d'un microcontrôleur (2), la mémoire flash comportant une pluralité de pages de mémoire effaçables uniquement de manière conjointe, et chacune des pages de mémoire présentant une pluralité de blocs de mémoire pouvant être écrits une seule fois après une opération d'effacement, et chaque clé étant stockée au moyen d'une opération d'écriture propre dans au moins un bloc de mémoire d'une page de mémoire commune qui forme la zone de mémoire prédéterminée (9e).

7. Procédé d'initialisation d'un dispositif de commande (1) comprenant au moins une unité de traitement de données (7), au moins une mémoire non volatile (8) pour stocker du code programme pour l'unité de traitement de données (7) et au moins une interface (4, 5) pour accéder à des services fournis par le dispositif de commande (1), en particulier le dispositif de commande (1) selon l'une quelconque des revendications 1 à 6, le procédé comprenant les étapes suivantes :
- démarrage (S11) du dispositif de commande (1) dans un mode de fonctionnement ouvert (S1) ;
- écriture (S12) d'au moins une clé au moyen d'un premier service (10a) dans une zone de mémoire prédéterminée (9e) de l'au moins une mémoire non volatile (8) dans le mode de fonctionnement ouvert (S1) ;
- passage (S13) dans un mode de fonctionnement protégé (S2) après l'écriture de l'au moins une clé ; et
- offre d'au moins un deuxième service (10b, 10c, 10e) pour interroger et/ou modifier des données stockées dans l'au moins une unité de traitement de données (7) et/ou dans l'au moins une mémoire non volatile (8) dans le mode de fonctionnement protégé (S2), un accès au deuxième service (10b, 10c, 10e) étant sécurisé au moyen de l'au moins une clé écrite dans la zone de mémoire prédéterminée (9e) ; et
- mise à disposition de l'au moins un deuxième service (10b, 10c, 10e) en outre dans le mode de fonctionnement ouvert (S1), les accès au deuxième service dans le mode de fonctionnement ouvert (S1) n'étant pas sécurisés au moyen d'une clé stockée dans la zone de mémoire prédéterminée (9e).

8. Procédé selon la revendication 7, dans lequel au moins les étapes de démarrage (S11), d'écriture (S12) et de changement (S13) sont mises en œuvre dans une phase finale d'un processus de fabrication du dispositif de commande (1), après son assemblage et avant sa livraison, en particulier dans le cadre d'un test fonctionnel du dispositif de commande (1).

9. Procédé selon la revendication 7 ou 8, dans lequel l'étape de passage (S13) dans le mode de fonctionnement protégé (S2) comprend :
- le calcul d'au moins un total de contrôle pour des clés stockées dans la zone de mémoire prédéterminée (9e) ;
- le stockage de l'au moins un total de contrôle dans la zone de mémoire prédéterminée (9e) ;
- facultativement, le stockage d'un motif de validation dans la zone de mémoire prédéterminée (9e) ;
- la génération d'un signal de confirmation après l'écriture de l'au moins un total de contrôle et, facultativement, du motif de validation ;
- le redémarrage du dispositif de commande (1), l'unité de traitement des données (7) reconnaissant, lors du redémarrage, les données stockées dans la zone de mémoire prédéterminée (9e) et faisant passer le dispositif de commande (1) dans le mode de fonctionnement protégé (S2).
